# FASCICULE DE BREVET EUROPEEN

(11) **EP 3 123 872 B1**
(45) Date de publication et mention de la délivrance du brevet: **18.04.2018**
(21) Numéro de dépôt: 16181448.8
(22) Date de dépôt: 27.07.2016
(51) Int. Cl.: A23L 3/3427, A23L 3/36

(54) **DISPOSITIF DE STABILISATION D'UN PRODUIT FRAIS**
EINRICHTUNG ZUR STABILISIERUNG VON FRISCHEN PRODUKTE
SYSTEM FOR STABILISING FRESH PRODUCTS

(30) Priorité: 27.07.2015 FR 1557165
(43) Date de publication de la demande: 01.02.2017
(73) Titulaire: SOMEZ, 34430 Saint Jean de Vedas (FR)
(72) Inventeur: BORE, Christian, 34690 FABREGUES (FR); REGIS, Robert-Charles, 34000 MONTPELLIER (FR); SADOUN, Alain, 92400 COURBEVOIE (FR)
(74) Mandataire: Rhein, Alain

(56) Documents cités:
- EP-A1- 0 252 988
- WO-A1-95/23517
- US-A- 2 765 046
- US-A- 5 924 292
- US-A1- 2009 045 095

## Description

La présente invention concerne un dispositif de stabilisation d'un produit frais stocké dans un espace réfrigéré, selon les revendications 1 à 7, le produit frais pouvant être des denrées alimentaires ou des matières périssables, tels que de la viande, des fruits, des légumes, des pâtisseries, des viennoiseries ou des fleurs, l'espace réfrigéré pouvant être un espace ouvert tel qu'une vitrine réfrigérée, ou un espace fermé tel qu'un réfrigérateur, un congélateur, une chambre froide positive ou une chambre froide négative.

Actuellement, l'humidité relative ambiante dans un espace réfrigéré contenant un produit frais est assez mal régulée, et, de ce fait, les produits frais qui y sont stockés peuvent avoir une conservation assez faible, avoir un aspect visuel de mauvaise qualité et produire des mauvaises odeurs.

Actuellement il n'est pas connu de dispositif de stabilisation de produit frais qui permet de réguler l'humidité relative ambiante dans tout espace réfrigéré connu (par exemple une vitrine réfrigérée, un réfrigérateur, un congélateur, une chambre froide positive ou une chambre froide négative) en tenant compte de la température et du degré d'hygrométrie régnant dans l'espace réfrigéré et de l'environnement de fonctionnement de cet espace réfrigéré, cette régulation de l'atmosphère permettant d'améliorer la conservation des produits frais stockés dans l'espace réfrigéré, de supprimer les mauvaises odeurs générées par ces produits frais, et, éventuellement d'éviter les moisissures sur ces produits frais. En effet, le fonctionnement d'une vitrine réfrigérée qui est située chez un artisan-commerçant est différent de celui d'une chambre froide qui est située dans un dépôt et qui n'est utilisée qu'en début ou qu'en fin de journée, et de celle d'une chambre froide qui est située dans une cuisine d'un restaurant et qui est utilisée plusieurs dizaines de fois par jour.

Par ailleurs, dans le cas où le produit frais est de la viande crue exposée dans une vitrine réfrigérée d'un boucher, cette viande sèche en surface au fur et à mesure de son temps d'exposition et, de ce fait, bien que la qualité de la viande ne soit pas détériorée, sa mauvaise apparence peut dissuader des clients d'en acheter. De plus, le boucher doit enlever la partie séchée de la viande, ce qui entraîne une perte de la viande séchée qui est pourtant comestible et une perte de temps du fait de la manipulation de la viande crue pour enlever la partie sèche.

La présente invention vise à réaliser un dispositif de stabilisation de produit frais stockés dans un espace réfrigéré en tenant compte de la température et du degré d'hygrométrie de l'atmosphère régnant dans l'espace réfrigéré et de l'environnement de fonctionnement de celui-ci.

Selon l'invention, le dispositif de stabilisation adapté à stabiliser un produit frais stocké dans un espace réfrigéré comprend un produit de stabilisation qui comporte de l'alumine ou une zéolithe.

Du fait de la présence de l'alumine et/ou de zéolithe dans l'espace réfrigéré, l'atmosphère régnant dans cet espace est nettement plus saine : le produit de stabilisation (l'alumine et/ou la (les) zéolithe(s)) qui est un matériau poreux, absorbe et/ou rejette une partie des composants chimiques (dont l'humidité) de l'espace réfrigéré. De plus, les pores du produit de stabilisation (que ce soit de l'alumine ou une zéolithe) absorbent également les molécules chimiques produites par les produits frais disposés dans l'espace réfrigéré (par exemple, de l'éthylène dans le cas où les produits frais comprennent des fruits, et/ou des composés organiques volatils dans le cas où les produits frais comprennent de la viande). De ce fait, la conservation des produits frais est améliorée, la production de mauvaises odeurs est réduite (voire arrêtée) et l'aspect visuel des produits frais est également amélioré (dans le cas de viande, son séchage est réduit, voire arrêté). En outre, le produit de stabilisation, selon sa nature (telle qu'une zéolithe naturelle), peut être économique.

Selon un premier mode de réalisation, le produit de stabilisation peut être naturel ou artificiel. Le produit de stabilisation peut également comprendre un mélange de plusieurs zéolithes ou un mélange d'alumine et d'une ou plusieurs zéolithes. La (les) zéolithe(s) utilisée(s) peut (peuvent) être une (des) zéolithe(s) artificielle(s) (telle que de la zéolite 3A ou de la zéolithe 4A) et/ou une (des) zéolithe(s) naturelle(s) (telle que de la clinoptilolite. Les zéolithes utilisées peuvent être hydrophiles ou hydrophobes. Ces zéolithes peuvent être également un tamis moléculaire. D'une façon générale, le choix sur la composition (et la proportion) du produit de stabilisation dépend à la fois du (des) produit(s) frais contenu(s) dans l'espace réfrigéré, de la nature de l'espace réfrigéré (une vitrine réfrigérée, un réfrigérateur, un congélateur, une chambre froide positive ou une chambre froide négative) et des conditions d'utilisation de cet espace.

Selon un second mode de réalisation, le produit de stabilisation (ou au moins l'un des produits de stabilisation) a préalablement subi un traitement chimique qui lui confère une propriété chimique particulière. Par exemple, le traitement chimique préalable est une imprégnation du produit de stabilisation concerné dans une solution, par exemple, une solution oxydante (telle qu'une solution de permanganate de potassium) permettant d'oxyder les molécules chimiques produites par le produit frais, notamment l'éthylène. Le dispositif de stabilisation comprend une enveloppe ajourée qui laisse passer l'atmosphère régnant dans l'espace réfrigéré et qui enferme le(s) produit(s) de stabilisation. De ce fait, le(s) produit(s) de stabilisation qui est (sont) enfermé(s) dans l'enveloppe ajourée, peut (peuvent) traiter l'atmosphère de l'espace réfrigéré : l'atmosphère régnant dans l'espace réfrigéré pénètre dans l'enveloppe ajourée, atteint les produits de stabilisation, y est traitée et sort de l'enveloppe ajourée. Avantageusement, la proportion de la surface totale ouverte de l'enveloppe ajourée est optimisée de façon à laisser passer la plus grande quantité de l'atmosphère de l'espace réfrigérée tout en empêchant que les produits de stabilisation qui y sont enfermés ne puissent en sortir.

Selon une variante du mode de réalisation, l'enveloppe ajourée comprend des moyens de fixation (tels que des crochets et/ou des aimants) permettant au dispositif de stabilisation d'être fixé à un endroit particulièrement adéquat de l'espace réfrigéré. De préférence, le dispositif de stabilisation est fixé dans le flux d'air circulant dans l'espace réfrigéré, et, dans le cas d'une vitrine réfrigérée dont le contenu est visible du public, il est également de préférence fixé hors de la vue du public).

L'invention concerne également un espace réfrigéré ayant une atmosphère circulante traversant un dispositif de stabilisation. L' invention porte sur un dispositif de stabilisation adapté à stabiliser un produit frais stocké dans un espace réfrigéré, comprenant
- un produit de stabilisation qui comporte de l'alumine ou une zéolithe,
- une enveloppe ajourée qui laisse passer l'atmosphère régnant dans l'espace réfrigéré et qui enferme le produit de stabilisation,
dans lequel l'enveloppe ajourée a une forme de boudin.

D'autres particularités et avantages de la présente invention apparaitront dans la description d'un mode de réalisation donné à titre d'exemple non limitatif et illustré dans les dessins mis en annexe dans lesquels :
- la figure 1 est une vue en perspective d'un dispositif de stabilisation conforme à la présente invention ; et
- la figure 2 est une vue en coupe du dispositif de stabilisation de la figure 1.

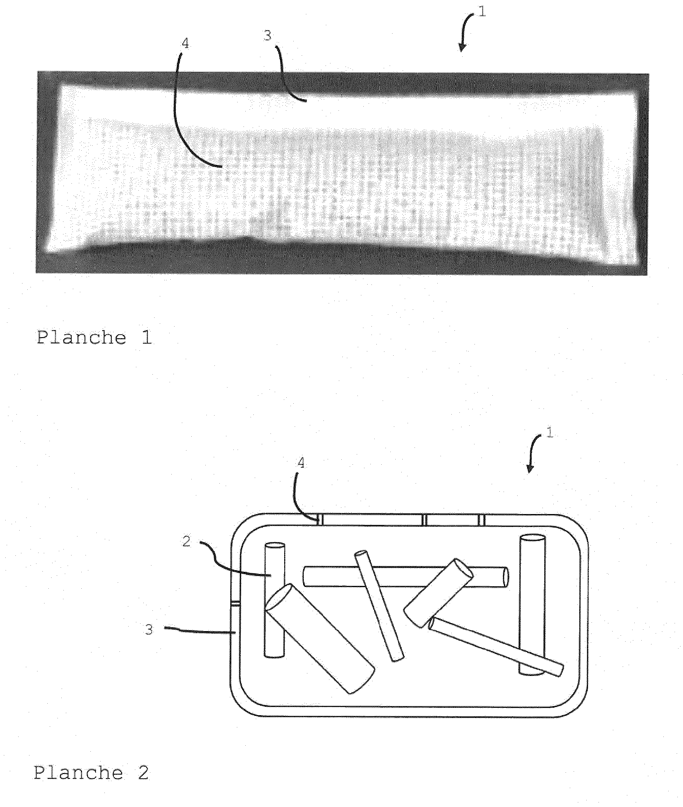

Comme illustré à la figure 1, la présente invention concerne un dispositif de stabilisation 1 adapté à stabiliser un produit frais (par exemple, de la viande crue) dans un espace réfrigéré (par exemple une vitrine réfrigérée d'un étal d'un boucher).

Dans le présent exemple, le dispositif de stabilisation 1 comprend un produit de stabilisation 2 formé par une zéolithe 2 et une enveloppe ajourée 3 à l'intérieur de laquelle est enfermée la zéolithe 2. Ici, la zéolithe 2 est de la clinoptilolite qui est une zéolithe naturelle peu chère et particulièrement efficace pour stabiliser la viande crue et réduire son assèchement pendant son exposition quotidienne et continue dans l'étal du boucher, ce qui permet à ce dernier de faire des économies sur la viande et sur son temps de travail (il n'a plus à enlever la viande séchée pendant le temps d'exposition de la viande).

Le choix du matériau de l'enveloppe ajourée 3 est fait en fonction de l'enceinte réfrigérée et du produit frais qui y est contenu. Ici, l'enveloppe ajourée 3 est une enveloppe faite en un matériau adapté pour le contact alimentaire de sorte qu'il n'y a pas de risque dans le cas où le dispositif de stabilisation 1 entrerait en contact avec le produit frais. Dans le présent exemple, l'enveloppe ajourée 3 est faite en tissu polyester enduit de polychlorure de vinyle. De préférence, le matériau de l'enveloppe ajourée 3 est stable pour une large plage de température (ici, la tenue en température du matériau va de -20 °C à 70 °C).

Afin de laisser passer l'atmosphère de l'espace réfrigéré au travers de l'enveloppe ajourée 3, celle-ci comprend des ouvertures 4 dont les dimensions permettent un important passage de l'atmosphère et un emprisonnement du produit de stabilisation 2. Ici, la taille de chaque ouverture 4 est comprise entre 1 et 2 mm. Toujours dans le présent exemple, la surface totale de la taille des ouvertures 4 représente entre 25 et 30 % de la surface totale de l'enveloppe ajourée 3.

Par ailleurs, dans le présent exemple, l'enveloppe ajourée 3 est configurée sous forme d'un boudin dont les dimensions permettent de manipuler facilement le dispositif de stabilisation 1 et de traiter efficacement le produit frais contenu dans l'espace réfrigéré. L'enveloppe ajourée 3 pourrait être un filet ou une enveloppe, le filet ou l'enveloppe pouvant être fait d'un tissu poreux, d'un matériau rigide ou d'un matériau flexible, l'important étant la possibilité de laisser passer l'atmosphère régnant dans l'enceinte réfrigérée tout en emprisonnant le produit de stabilisation 2.

Le dispositif de stabilisation 1 conforme à la présente invention permet de stabiliser le produit frais contenu dans l'espace réfrigéré en choisissant de façon adéquate l'enveloppe ajourée 3 et le produit de stabilisation 2 qui y est contenu.

## Revendications

1. Dispositif de stabilisation (1) adapté à stabiliser un produit frais stocké dans un espace réfrigéré, comprenant
- un produit de stabilisation (2) qui comporte de l'alumine ou une zéolithe,
- une enveloppe ajourée (3) qui laisse passer l'atmosphère régnant dans l'espace réfrigéré et qui enferme le produit de stabilisation (2)
**caractérisé en ce que** l'enveloppe ajourée (3) a une forme de boudin.

2. Dispositif de stabilisation (1) selon la revendication 1, **caractérisé en ce que** le produit de stabilisation (2) est formé par un mélange de zéolithes.

3. Dispositif de stabilisation (1) selon l'une des revendications 1 et 2, **caractérisé en ce que** le produit de stabilisation (2) est formé par un mélange d'alumine et d'au moins une zéolithe.

4. Dispositif de stabilisation (1) selon l'une des revendications 1 à 3, **caractérisé en ce qu'**au moins un des produits de stabilisation (2) a préalablement subi un traitement chimique.

5. Dispositif de stabilisation (1) selon la revendication 4, **caractérisé en ce que** le traitement chimique est une imprégnation du produit de stabilisation (2) dans une solution oxydante.

6. Dispositif de stabilisation (1) selon l'une des revendications 1 à 5, **caractérisé en ce que** l'enveloppe ajourée (3) comprend des moyens de fixation adaptés à fixer le dispositif de stabilisation (1) dans l'espace réfrigéré.

7. Dispositif de stabilisation (1) selon l'une des revendications 1 à 6, **caractérisé en ce que** l'enveloppe ajourée (3) est faite en un matériau adapté pour le contact alimentaire.

8. Espace réfrigéré comprenant un dispositif de stabilisation (1) selon l'une des revendications 1 à 7, ledit espace ayant une atmosphère circulante traversant ledit dispositif.

## Patentansprüche

1. Stabilisierungsvorrichtung (1), geeignet zum Stabilisieren eines in einem gekühlten Raum aufbewahren frischen Produkts, umfassend
- ein Stabilisierungsprodukt (2), das Aluminumoxid oder einen Zeolith umfasst,
- eine durchbrochene Hülle (3), die die im gekühlten Raum herrschende Atmosphäre durchlässt und das Stabilisierungsprodukt (2) umschließt,
**dadurch gekennzeichnet, dass** die durchbrochene Hülle (3) eine Form eines Rohrstranges hat.

2. Stabilisierungsvorrichtung (1) nach Anspruch 1, **dadurch gekennzeichnet, dass** das Stabilisierungsprodukt (2) aus einer Mischung von Zeolithen besteht.

3. Stabilisierungsvorrichtung (1) nach einem der Ansprüche 1 und 2, dadurch gekenntzeichnet, dass das Stabilisierungsprodukt (2) aus einer Mischung von Aluminiumoxyd und mindestens einem Zeolith besteht.

4. Stabilisierungsvorrichtung (1) nach einem der Ansprüche 1 bis 3, **dadurch gekennzeichnet, dass** mindestens eines der Stabilisierungsprodukte (2) zuvor einer chemischen Behandlung unterzogen wurde.

5. Stabilisierungsvorrichtung (1) nach Anspruch 4, **dadurch gekennzeichnet, dass** die chemische Behandlung eine Imprägnierung des Stabilisierungsprodukts (2) in einer oxidierenden Lösung ist.

6. Stabilisierungsvorrichtung (1) nach einem der Ansprüche 1 bis 5, **dadurch gekennzeichnet, dass** die durchbrochene Hülle (3) Befestigungsmittel umfasst, die geeignet sind, um die Stabilisierungsvorrichtung (1) im Kühlraum zu befestigen.

7. Stabilisierungsvorrichtung (1) nach einem der Ansprüche 1 bis 6, dadurch gekenntzeichnet, dass die durchbrochene Hülle (3) aus einem für Berührung mit Lebensmitteln geeigneten Material besteht.

8. Kühlraum, umfassend eine Stabilisierungsvorrichtung (1) nach einem der Ansprüche 1 bis 7, wobei der besagte Raum eine umlaufende Atmosphäre hat, die durch die besagte Vorrichtung hindurch tritt.

## Claims

1. Stabilizing device (1) adapted to stabilize a fresh product stored in a refrigerated space, comprising
- a stabilizing product (2), which includes alumina or a zeolite,
- an openwork envelope (3), which lets the prevailing atmosphere pass into the refrigerated space and which encloses the stabilizing product (2),
wherein the openwork envelope (3) has the shape of a strand.

2. Stabilizing device (1) according to claim 1, wherein the stabilizing product (2) is formed of a mixture of zeolites.

3. Stabilizing device (1) according to one of claims 1 and 2, wherein the stabilizing product (2) is formed of a mixture of alumina and at least one zeolite.

4. Stabilizing device (1) according to one of claims I to 3, wherein at least one of the stabilizing products (2) has previously be submitted to a chemical treatment.

5. Stabilizing device (1) according to claim 4, wherein the chemical treatment is an impregnation of the stabilizing product (2) in an oxidizing solution.

6. Stabilizing device (1) according to one of claims 1 to 5, wherein the openwork envelope (3) comprises fastening means adapted to fasten the stabilizing device (1) in the refrigerated space.

7. Stabilizing device (1) according to one of claims 1 to 6, wherein the openwork envelope (3) is made of a material suitable for entering into contact with food.

8. Refrigerated space comprising a stabilizing device (1) according to one of claims 1 to 7, said space having a circulating atmosphere passing through said device.
